# EUROPEAN PATENT SPECIFICATION

(11) **EP 0 400 914 B1**
(45) Date of publication and mention of the grant of the patent: **26.06.1996**
(21) Application number: 90305714.9
(22) Date of filing: 25.05.1990
(51) Int. Cl.: A01N 25/16

(54) **Agricultural foam compositions**
Landwirtschaftliche Schaum-Zusammensetzungen
Compositions mousseuses agricoles

(30) Priority: 02.06.1989 US 361621
(43) Date of publication of application: 05.12.1990
(73) Proprietor: PFIZER INC., New York, N.Y. 10017 (US)
(72) Inventor: Macri, Christopher A., Old Lyme, CT (US); Miller, James W., Mystic, CT (US); Sarges, Divina A., Ledyard, CT (US); Sprott, David J., Fresno, CA (US)
(74) Representative: Wood, David John

(56) References cited:
- EP-A- 0 272 386
- US-A- 3 819 359
- DERWENT ACCESSION NO. 85-213 733, Questel Tele- systems, (WPIL) Derwent Publications Ltd., London (GB);

## Description

The present invention is directed to the field of agriculture. More particularly, it is directed to agricultural chemicals dispersed in a foam and to a process for seed treatment using agricultural chemicals dispersed in a foam.

During the application of agricultural chemicals such as pesticides, herbicides, fungicides, insecticides, fumigants, fertilizers etc. to the area to be treated, there are a number of problems. One problem often encountered is that these agricultural chemicals, if applied as a powder, are subject to the effects of wind and rain in which case some of the agricultural chemical is lost to the surrounding environment. Consequently, less of the active ingredient is available to the area to be treated. Another approach is to apply the agricultural chemicals as an aqueous solution, dispersion or slurry. However, because of the hydrophobic nature of many agricultural chemicals, this often leads to uneven distribution of chemicals due to precipitation, agglomeration or lack of adherence properties. Moreover, the high residual water content from such means of application is frequently deleterious. To alleviate these problems, it has been proposed to administer these agricultural chemicals in combination with various ingredients.

One proposed approach is to administer the agricultural chemical in combination with a gelling agent. This process is referred to in a number of United States Patents, for example, U.S. 3,836,638, 3,876,671, 4,177,056, 4,107,292, 3,562,176, 3,143,407, 3,253,984, 4,436,719 and 4,435,931.

Another approach is to apply these agricultural chemicals in various foams, both aqueous and solid. Examples of these combinations are referred to in, e.g. U.S. Patent Nos. 4,462,903, 4,609,403, 4,587,230, 4,517,764 and 4,656,811, Japanese Kokai Nos. 63045201, 62190102, 62171617, 62070285, 61234718, 61165303, 61152603, 61123963, 61010096, 60130501, 60042302, 59025301, 58172303, 58032801, 58018301 and 56077202. Great Britain Patent No. 2189478, Spain Patent No. 8608269, Russian Patent Nos. 1147257, 1125214 and 923490 also refer to combinations of an agricultural chemical with a foam.

One particular area of interest is the treatment of seeds with agricultural chemicals. Conventionally, these seeds have been treated using either dry inerts, e.g. fumed silica, finely divided clays, or water as the carrier. These approaches, while useful for their intended purposes, may also result in less efficient application of the agricultural chemical to the seed. For example, in the case of clay, the substance is susceptible to loss due to drifts from the target area, precipitation or lack of adherence problems, One approach to these problems in the area of seed coatings has also been to use protective or stimulating substances in a foam. This process is referred to in Russian patent Nos. 858601, 865169, and 923401.

Another approach is to use a polysaccharide plus an agricultural chemical as a vehicle for seed coating. This process is referred to in EP-209277.

US Patent no. 3,819,359 discloses a method for forcing differentiation of the pineapple plant or ripening of pineapples by treatment with ethylene or a discontinuous gas phase in an aqueous foam. EP-A-0 272 386 relates to a water soluble, foamable, insecticidally-active composition. JP-A-6 013 650 discloses a composition comprising an insecticidal and fungicidal component.

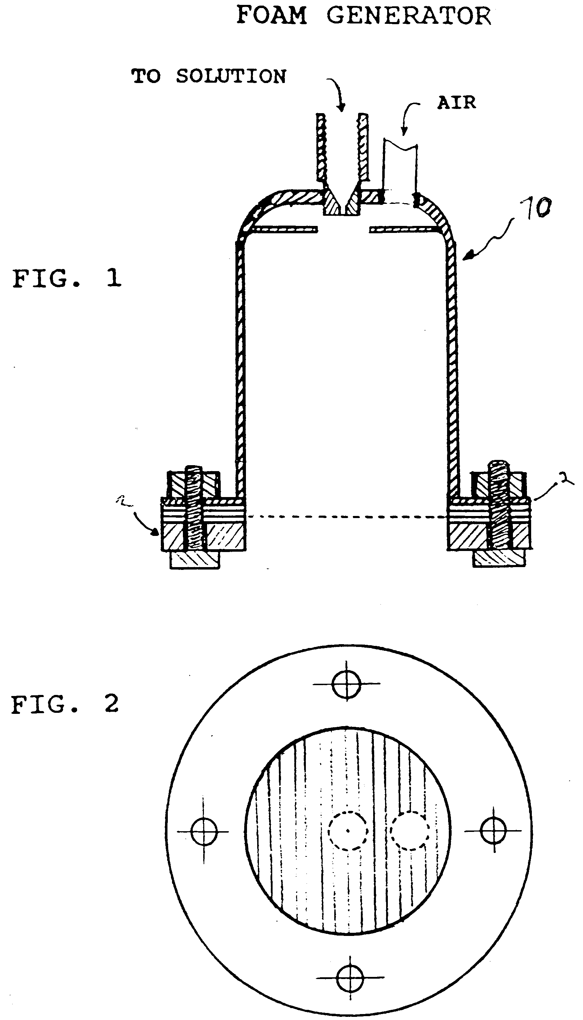

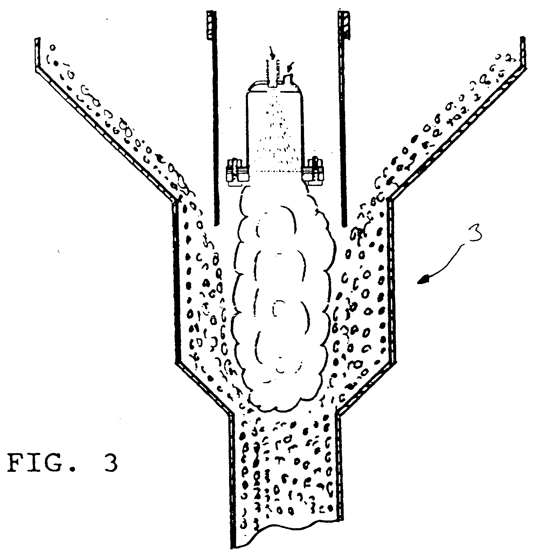

FIGS 1-3 illustrate a foam generator which can be used in the present invention.

In one embodiment, the present invention is directed to a process for the treatment of plant seeds with an agricultural chemical as claimed in claim 5.

Preferred is a process wherein said seed is selected from the group consisting of corn, soybean, wheat, grain, oats, alfalfa, rice, watermelons, flax and sorghum seed. N-(trichloromethylthio)-4-cyclohexene-1,2-dicarboximide and O-(2-diethylamino-6-methyl-4-pyrimidinyl)-O,O-dimethyl phosphorothioate are the preferred chemicals.

In another embodiment, the present invention is directed to a composition comprising an agricultural chemical in an aqueous foam forming composition as claimed in claim 1.

The polysaccharide is selected from the group consisting of xanthans, succinoglycans, and galactomannans.

An especially preferred composition is one wherein the polysaccharide is xanthan.

The synthetic polymer is polyvinyl alcohol.

The surfactants are selected from the group consisting of alkali metal alkyl aryl sulfonate, especially sodium alkyl aryl sulfonate, and ammonium lauryl sulfate.

Yet further preferred is a composition further comprising the addition of a colorant.

Further preferred is a composition further comprising the addition of an aqueous foam stabilizer. Preferred aqueous foam stabilizers are selected from the group consisting of methanol, ethanol, isopropanol, glycerol and ethylene glycol, with methanol being a preferred stabilizer.

Preferred also is the composition wherein said conditions for generating an aqueous foam comprises combining the combination of components (i), (ii) and (iii) with air in a volume ratio of from about 1:1 to about 1:199.

Seeds treated with the composition or process of the present invention also form a part of the present invention.

The preferred polymers, either polysaccharides or synthetic polymers, for use in the composition or processes of the current invention are those which increase the viscosity and adherence properties of the aqueous medium and/or those which form continuous films when the viscosified solutions are dried.

The water-soluble polysaccharide used in the present invention can be a polysaccharide produced by bacteria of the genera Xanthomonas, Agrobacterium and Pseudomonas.

Polysaccharides produced by bacteria of the genus Xanthomonas are commonly referred to as xanthan gums. The xanthan gum employed in the present invention includes the commercially available solid form of gum such as FLODRILL S (trade mark) (Pfizer). Also of interest are the materials described in United States Patent No. 3,717, 452 of which columns 2, 3 and 4 are expressly incorporated into the present specification by reference to show a method of preparing the xanthan gum. Xanthan gum is a complex polysaccharide having a molecular weight of over one million, with a cellulose-like backbone composed of repeating -D-(1-4) glucose units, with acetyl mannose, glucuronic acid, and mannose partially modified with pyruvate ketal groups in side-chains attached -D-(1-3) to each alternate backbone glucose unit. Xanthan derivatives can also be employed in the composition and processes of the present invention, for example, a xanthan gum which is partially deacetylated and/or partially depyruvated.

Polysaccharides produced by bacteria of the genera Agrobacterium and Pseudomonas correspond to those heteropolysaccharides documented in the prior art as succinoglycan, succinoglucan, succinoglycan-like polymers and succinoglucan-like polymers, all hereinafter referred to as succinoglycans. Succinoglycans are heteropolysaccharides comprised of galactose and 6.0-9.0 moles of glucose for each mole of galactose. These succinoglycans are substituted by acidic functional groups imparting a net negative charge to the heteropolysaccharide. The heteropolysaccharide additionally contains variable proportions of acid residues such as pyruvate, succinate and acetate. These succinoglycans are produced by bacteria of the genera Agrobacterium and Pseudomonas, with preferred succinoglycans being those produced by the species Agrobacterium radiobacter and Agrobacterium tumefaciens.

Galactomannans include guar gum and locust bean gum. Guar gum is derived from the seed of the guar plant, Cyanopsis tetragonolobus. The commercially available gum is substantially pure endosperm from that seed. The pure gum can be used in the process or composition of the present invention; however, derivatives such as oxidized guar gum, carboxyethylated guar gum and hydroxyalkylated guar gums can also be used. The hydroxyalkyl guar gum derivatives include hydroxyethyl and hydroxypropylguar.

Locust bean gum is derived from the seeds of the tree Ceratonia siliqua, or the carob tree. The carob, an evergreen that grows to 10 meters, produces pods 10-20 cm long and 2-5 cm wide. Pods are shaken from the trees and are transported to kibbling machines where the pods are broken open and the beans freed. The beans are soaked in water and then milled to remove the shell, release the germ and free the endosperm for later grinding and sifting. The ground endosperm, milled as free of protein as possible, is the commercial gum of industry. Derivatives of locust bean gum such as hydroxyalkyl locust bean gum and phosphated locust bean gums can also be used in the present invention.

The term "aqueous medium" is used generically in the present specification and in the claims. This term includes fresh water, brines, tap and distilled water and other aqueous media with or without additives which can be used in accordance with the invention.

The synthetic polymer used in the composition or process of the present invention is a synthetic polymer soluble in an aqueous medium, that is polyvinyl alcohol. The above polymer is a staple item of commerce and is commercially available.

In the composition and process of the present invention, an agricultural chemical is dispersed in the foam composition.

The following systemic pesticides can be dispersed in the aqueous foams of the present invention. The common or generic name is given first, followed by the chemical name.
- captan:: N-(trichloromethylthio)-4-cyclohexene-1,2-dicarboximide
- metalaxyl:: N-(2,6-dimethylphenyl)-N-(methoxyacetyl)alanine methyl ester
- pyrimiphos methyl:: O-(2-diethylamino-6-methyl-4-pyrimidinyl)-O,O-dimethyl phosphorothioate
If desired, an inorganic foam stabilizer, or a foam adhering agent (commonly called by those skilled in the art a "sticker") can also be added to the composition or used in the process of the present invention. Non-limiting examples of preferred foam-adhering agents are commercially available finely divided clays such as bentonite, attapulgite, sepiolite and montmorillonite.

If desired, an aqueous foam stabilizer such as a polyhydric alcohol, e.g. glycerol, or a monohydric alcohol, e.g. methanol can also be added to the composition or used in the processes of the present invention. In addition to stabilizing the foam, the addition of the alcohol also serves to lessen the water content and activity of the foam. Thus, any possible adverse effects of the excess water on the seeds to be treated are alleviated.

If desired, colorants can also be added to the composition or used in the processes of the present invention.

A preferred composition of the present invention contains from about 100 to about 5000 ppm of the polysaccharide, and from about 50 to about 100000 ppm of the surfactant. The aqueous foam stabilizer, if added, is used in a range of from about 100 to about 200000 ppm.

The compositions of the present invention and the processes of the present invention are especially preferred for use in seed coatings. Non-limiting examples of seeds which can be coated using either the composition or processes of the present invention are corn, wheat, oats, barley, flax, beans, lentils, carrots, cucumbers, cantaloupes, squash, pumpkin, watermelon, beets, swiss chard, rutabaga, sugar beets, clover, alfalfa, soybeans, sorghum, turnips, cotton, blue grass, cabbage, cauliflower, radish, broccoli, brussel sprouts, spinach, eggplant, peppers, cornpeas, chickpeas, rye, and sesame. Other seeds belonging to generic groupings such as grains, legumes, vegetables and grasses can also be coated.

The aqueous medium, polysaccharide or synthetic polymer, surfactant, and/or additional ingredients, are combined under conditions to generate a foam having dispersed therein an agricultural chemical. An apparatus for generating these foams is shown in FIGS 1-3. As shown, the apparatus 10 consists of a foam generator 1 shown in FIG 1 having spray nozzle screens 2 (depicted in cross section in FIG 2.) which is put into hopper 3 shown in FIG 3. When using this apparatus, the foam forming composition is combined with air in a ratio of 1:1 to 1:199. This combination results in a foam having an aqueous content of from about 0.05% to about 50%.

Having described the invention in general terms, reference is now made to specific examples thereof. It is to be understood that these examples are not to be construed as limiting the present invention, the scope of which is determined by the appended claims.

### Example 1

An aqueous dispersion was prepared containing 4.64% N-(trichloromethylthio)-4-cyclohexene-1,2-dicarboximide fungicide and 0.46% finely divided clay (Captan 90, trade mark, ICI Americas, Wilmington, DE), 0.095% O-(2-diethylamino-6-methyl-4-pyrimidinyl)-O,O-dimethyl phosphorothioate (pyrimiphos methyl, NuGro Insecticide SP, trade mark, Wilbur-Ellis, Fresno, CA), 0.205% coal tar dye (NuGro Red LC, trade mark, Wilbur-Ellis, Fresno, CA), 1.0% Stepanol AM-V surfactant (trade mark) (30% ammonium lauryl sulfate, Stepan Co., Northfield, IL), and 0.10% xanthan polysaccharide (FLODRILL S, trade mark, Pfizer Inc. Chemical Division, New York, NY). The dispersion was pumped through a foam generator at a rate of 1.09 x 10⁻³ m³/min (0.29 U.S. gal/min) with 0.141 m³/m (5 standard cubic feet/meter) (SCFM) air to produce a stable foam with 1-2% liquid volume, 49-99:1 gas:liquid ratio, and bulk density 9.54-17.67 kg/m³ (0.6-1.1 lb/cu-ft). The foam was stable for more than 5 minutes.

### Example 2

An aqueous dispersion was prepared with the composition of Example 1 but the xanthan polysaccharide was replaced with 0.25% guar gum (Galactasol 211, trade mark, Aqualon Co., Wilmington, DE). The dispersion was pumped through a foam generator with air and a stable foam was produced.

### Example 3

An aqueous dispersion was prepared with the composition of Example 1 but the xanthan polysaccharide was replaced with a succinoglycan polysaccharide. The dispersion was pumped through a foam generator with air and a stable foam was produced.

### Example 4

An aqueous dispersion was prepared with the composition of Example 1 but the xanthan polysaccharide content was increased to 0.20% and 20% methanol was added. The solution was pumped through a foam generator with air and a stable foam was produced.

### Example 5

An aqueous dispersion was prepared with the composition of Example 2 but the surfactant was Calsoft L-40 (trade mark) (40% sodium alkylaryl sulfonate, Pilot Chemical Co., Santa Fe Springs, CA). The dispersion was pumped through a foam generator with air and a stable foam was produced.

### Example 6

An aqueous dispersion was prepared with the composition of Example 2 but the surfactant was Siponate DS-4 (trade mark) (23% sodium dodecylbenzene sulfonate, Alcolac, Inc., Baltimore, MD). The dispersion was pumped through a foam generator with air and a stable foam was produced.

### Example 7

An aqueous dispersion was prepared with the composition of Example 1 but the fungicide was N-(2,6-dimethylphenyl)-N-(methoxyacetyl) alanine methyl ester (metalaxyl, Apron TL, trade mark Wilbur-Ellis, Fresno, CA). The dispersion was pumped through a foam generator with air and a stable foam was produced in the absence of seeds.

### Example 8

An aqueous dispersion was prepared containing 5.56% N-(trichloromethylthio)-4-cyclohexene-1,2-dicarboximide fungicide, 1.39% finely-divided clay and dye (NuGro Captan 75 Dust, trade mark, Wilbur-Ellis, Fresno, CA), 0.095% O-(2-diethylamino-6-methyl-4-pyrimidinyl)-O,O-dimethyl phosphorothioate (pyrimiphos methyl, NuGro Insecticide SP, trade mark, Wilbur-Ellis, Fresno, CA), 1.0% Stepanol AM-V surfactant (trade mark) (30% ammonium lauryl sulfate, Stepan Co., Northfield, IL), and 0.10% xanthan polysaccharide (FLODRILL S, trade mark, Pfizer Inc. Chemical Division, New York, NY). The dispersion was pumped through a foam generator with air and a stable foam was produced.

### Example 9

An aqueous dispersion was prepared with the composition of Example 8 but the xanthan polysaccharide content was increased to 0.20% and 20% methanol was added. The dispersion was pumped through a foam generator with air and a stable foam was produced.

### Example 10

An aqueous dispersion was prepared with the composition of Example 8 but the xanthan polysaccharide was replaced with a succinoglycan polysaccharide. The dispersion was pumped through a foam generator with air and a stable foam was produced.

### Example 11

An aqueous dispersion was prepared containing 8.16% N-(trichloromethylthio)-4-cyclohexene-1,2-dicarboximide fungicide and 0.82% finely-divided clay (Captan 90, trade mark, ICI Americas, Wilmington, DE), 0.187% O-(2-diethylamino-6-methyl-4-pyrimidinyl)-O,O-dimethyl phosphorothioate (pyrimiphos methyl, NuGro Insecticide SP, trade mark, Wilbur-Ellis, Fresno, CA), 0.360% coal tar dye (NuGro Red LC, trade mark, Wilbur-Ellis, Fresno, CA), 1.0% Stepanol AM-V surfactant (trade mark) (30% ammonium lauryl sulfate, Stepan Co., Northfield, IL), 0.20% xanthan polysaccharide (FLODRILL S, trade mark, Pfizer Inc. Chemical Division, New York, NY), and 20% methanol. The dispersion was pumped through a foam generator with air and a stable foam was produced.

### Example 12

An aqueous dispersion with the composition of Example 1 was rapidly stirred in a Waring Blender (trade mark) to produce a stable foam with 40% liquid volume, 1.5:1 gas:liquid ratio, and bulk density of 40 g/100 ml. The stability of the foam was demonstrated in that it took over 45 minutes for 100 ml of foam to yield 10 ml of separate liquid phase.

### Example 13

An aqueous dispersion was prepared with the composition of Example 1 but the xanthan polysaccharide was replaced with 1.0% polyvinyl alcohol (Elvanol 90-50, trade mark, E. I. du Pont de Nemours, Inc., Wilmington, DE). The dispersion was pumped through a foam generator with air to produce a stable foam used to treat hybrid corn seeds (AgriPro, trade mark, Nickerson American Plant Breeders, Mission, KA). The treated seeds appeared evenly coated and lustrous.

### Example 14

Aqueous dispersions with compositions of the previous Examples were rapidly stirred in a Waring Blender (trade mark) to produce a stable 40% liquid foam used to treat hybrid corn seeds (DeKalb DK547 size F4, trade mark, good, and DeKalb DK636 size R14, trade mark damaged, DeKalb-Pfizer Genetics, Grinnell, IA) with a modified Wilbur-Ellis (trade mark) seed treater to give a treatment dosage level of 430 ppm fungicide and 8 ppm insecticide. The treated seeds appeared evenly coated and lustrous and the coating was not easily removed by handling, while seeds treated with a standard slurry treatment (Captan 400, trade mark, Gustafson Inc., Dallas, TX, and NuGro Insecticide SP, trade mark, Wilbur-Ellis, Fresno, CA) appeared less uniform and had coatings that were easily rubbed off. Seeds treated by both methods were planted in soil in a greenhouse and germination rates at two temperatures were measured and compared to those of untreated seeds. The foam-treated damaged seeds had significantly improved low-temperature germination rates vs. conventional slurry treatment and no treatment. Results are given below.

| Seed Type | Treatment | Percent Germination | |
|---|---|---|---|
| | | 10°C | 25°C |
| Damaged | Foam, Example 1 | 91 | 94 |
| Damaged | Foam, Example 2 | 84 | 95 |
| Damaged | Foam, Example 5 | 86 | 94 |
| Damaged | Standard Slurry | 70 | 90 |
| Damaged | None | 36 | 90 |
| Good | Foam, Example 1 | 94 | 98 |
| Good | Foam, Example 2 | 95 | 97 |
| Good | Foam, Example 5 | 93 | 95 |
| Good | Standard Slurry | 91 | 96 |
| Good | None | 87 | 96 |

### Example 15

Aqueous solutions with compositions of the previous Examples were pumped through a foam generator at a rate of 1.09 x 10⁻³ m³/min (0.29 U.S. gal/min) with 0.141 m³/m (5 SCFM) air to produce a stable foam with 1-2% liquid volume, 49-99:1 gas:liquid ratio, and bulk density 9.54-17.67 kg/m³ (0.6-1.11 lb/cu.-ft). The foam was used to treat hybrid corn seeds (DeKalb DK547 size F4, trade mark, good, and DeKalb DK636 size R14, trade mark damaged) with a modified Wilbur-Ellis (trade mark) seed treater to give a treatment dosage level of 430 ppm fungicide and 8 ppm insecticide. The treated seeds appeared evenly coated and lustrous. The coating was not easily removed by handling. The treated seeds were planted in soil in a green house and germination rates at two temperatures were measured and compared to those of untreated seeds. The foam-treated damaged seeds had significantly greater low-temperature germination rates vs. untreated seeds. Results are given below.

| Seed Type | Treatment | Percent Germination | |
|---|---|---|---|
| | | 10°C | 25°C |
| Damaged | Foam, Example 1 | 82 | 90 |
| Damaged | Foam, Example 3 | 79 | 91 |
| Damaged | Foam, Example 8 | 80 | 96 |
| Damaged | Foam, Example 10 | 77 | 92 |
| Damaged | None | 28 | 89 |
| Good | Foam, Example 1 | 91 | 95 |
| Good | Foam, Example 3 | 90 | 92 |
| Good | Foam, Example 8 | 89 | 96 |
| Good | Foam, Example 10 | 91 | 96 |
| Good | None | 86 | 93 |

## Claims

1. A composition comprising an agricultural chemical in an aqueous foam-forming composition, the agricultural chemical being selected from one or more of the group consisting of N-(trichloromethylthio)-4-cyclohexene-1,2-dicarboximide,O-(2-diethylamino-6-methyl-4-pyrimidinyl)-O,O-dimethylphosphorothioate and N-(2,6-dimethylphenyl)-N-(methoxyacetyl)alanine methyl ester, and the aqueous foam forming composition comprising
(i) an aqueous medium,
(ii) a surfactant selected from the group consisting of ammonium lauryl sulfate and an alkali metal alkyl aryl sulfonate and
(iii) a polysaccharide or synthetic polymer that is soluble in an aqueous medium and which is selected from the group consisting of a xanthan, a succinoglycan, a galactomannan and a polyvinyl alcohol.

2. A composition as claimed in claim 1 wherein the alkali metal alkyl aryl sulfonate is a sodium alkyl aryl sulfonate.

3. A composition as claimed in claim 1 or 2 wherein the galactomannan is guar gum.

4. A foam composition comprising a composition as claimed in any preceding claim which has been exposed to conditions suitable to generate an aqueous foam therefrom.

5. A method for the treatment of a seed with an agricultural chemical comprising administering to the seed a foam composition as claimed in claim 4.

6. A process for the preparation of an agricultural composition comprising combining an agricultural chemical selected from one or more of the group consisting of N-(trichloromethylthio)-4-cyclohexene-1,2-dicarboximide, O-(2-diethylamino-6-methyl-4-pyrimidinyl)-O,O-dimethylphosphorothioate and N-(2,6-dimethylphenyl)-N-(methoxyacetyl)alanine methyl ester, with an aqueous medium, a surfactant selected from the group consisting of ammonium lauryl sulfate and an alkali metal alkyl aryl sulfonate,and a polysaccharide or synthetic polymer that is soluble in an aqueous medium and which is selected from the group consisting of a xanthan, a succinoglycan, a galactomannan and a polyvinyl alcohol.

7. A process for the preparation of an agricultural foam composition comprising exposing an agricultural composition as defined in claim 6 to conditions suitable to generate an aqueous foam therefrom.

8. A process as claimed in claim 6 or 7 wherein the alkali metal alkyl aryl sulfonate is a sodium alkyl aryl sulfonate.

9. A process as claimed in claim 6, 7, or 8 wherein the galactomannan is guar gum.

## Patentansprüche

1. Zusammensetzung, umfassend eine Agrochemikalie in einer wässerigen, schaumbildenden Zusammensetzung, wobei die Agrochemikalie aus einer oder mehreren der Gruppe, bestehend aus N-(Trichlormethylthio)-4-cyclohexen-1,2-dicarboximid, O-(2-Diethylamino-6-methyl-4-pyrimidinyl)-O,O-dimethylphosphorsäurethioester und N-(2,6-Dimethylphenyl)-N-(methoxyacetyl)alaninmethylester ausgewählt ist und die wässerige schaumbildende Zusammensetzung
(i) ein wässeriges Medium,
(ii) ein Tensid, ausgewählt aus der Gruppe, bestehend aus Ammoniumlaurylsulfat und einem Alkalimetallalkylarylsulfonat und
(iii) ein Polysaccharid oder synthetisches Polymer, das in einem wässerigen Medium löslich ist und das ausgewählt ist aus der Gruppe, bestehend aus einem Xanthan, einem Succinoglycan, einem Galactomannan und einem Polyvinylalkohol, umfaßt.

2. Zusammensetzung nach Anspruch 1, wobei das Alkalimetallalkylarylsulfonat ein Natriumalkylarylsulfonat ist.

3. Zusammensetzung nach Anspruch 1 oder 2, wobei das Galactomannan Guargummi ist.

4. Schaumzusammensetzung, umfassend eine Zusammensetzung nach einem vorangehenden Anspruch, die zur Erzeugung wässerigen Schaums daraus geeigneten Bedingungen ausgesetzt wurde.

5. Verfahren zur Behandlung von Saatgut mit einer Agrochemikalie, umfassend Verabreichen einer Schaumzusammensetzung nach Anspruch 4 an das Saatgut.

6. Verfahren zur Herstellung einer landwirtschaftlichen Zusammensetzung, umfassend Vereinigen einer Agrochemikalie, ausgewählt aus einer oder mehreren der Gruppe, bestehend aus N-(Trichlormethylthio)-4-cyclohexen-1,2-dicarboximid, O-(2-Diethylamino-6-methyl-4-pyrimidinyl)-O,O-dimethylphosphorsäurethioester und N-(2,6-Dimethylphenyl)-N-(methoxyacetyl)alaninmethylester mit einem wässerigen Medium, einem Tensid, ausgewählt aus der Gruppe, bestehend aus Ammoniumlaurylsulfat und einem Alkalimetallalkylarylsulfonat und einem Polysaccharid oder synthetischem Polymer, welches in einem wässerigen Medium löslich ist und ausgewählt ist aus der Gruppe, bestehend aus einem Xanthan, einem Succinoglycan, einem Galactomannan und einem Polyvinylalkohol.

7. Verfahren zur Herstellung einer landwirtschaftlichen Schaumzusammensetzung, umfassend Aussetzen einer landwirtschaftlichen Zusammensetzung nach Anspruch 6 Bedingungen, die zur Erzeugung eines wässerigen Schaums daraus geeignet sind.

8. Verfahren nach Anspruch 6 oder 7, wobei das Alkalimetallalkylarylsulfonat ein Natriumalkylarylsulfonat ist.

9. Verfahren nach Anspruch 6, 7 oder 8, wobei das Galactomannan Guargummi ist.

## Revendications

1. Composition comprenant un agent agrochimique dans une composition aqueuse de formation de mousse, l'agent agrochimique consistant en un ou plusieurs des composés du groupe consistant en N-(trichlorométhylthio)-4-cyclohexène-1,2-dicarboximide, O,O-diméthylphosphorothioate de O-(2-diéthylamino-6-méthyl-4-pyrimidinyle) et ester méthylique de N-(2,6-diméthylphényl)-N-(méthoxyacétyl)alanine, et la composition aqueuse de formation de mousse comprenant :
(i) un milieu aqueux,
(ii) un surfactant choisi dans le groupe consistant en laurylsulfate d'ammonium et un alkylarylsulfonate de métal alcalin, et
(iii) un polysaccharide ou polymère synthétique qui est soluble dans le milieu aqueux et qui est choisi dans le groupe consistant en un xanthane, un succinoglycane, un galactomannane et un polymère d'alcool vinylique.

2. Composition suivant la revendication 1, dans laquelle l'alkylarylsulfonate de métal alcalin est un alkylarylsulfonate de sodium.

3. Composition suivant la revendication 1 ou 2, dans laquelle le galactomannane consiste en gomme guar.

4. Composition de mousse comprenant une composition suivant l'une quelconque des revendications précédentes qui a été soumise à des conditions convenables pour engendrer une mousse aqueuse à partir de celle-ci.

5. Procédé de traitement d'une semence avec un agent agrochimique, comprenant l'administration à ses semences d'une composition de mousse suivant la revendication 4.

6. Procédé de préparation d'une composition à usage agricole, comprenant l'association d'un agent agrochimique consistant en un ou plusieurs composés du groupe consistant en N-(trichlorométhylthio)-4-cyclohexène-1,2-dicarboximide, O,O-diméthylphosphorothioate de O-(2-diéthylamino-6-méthyl-4-pyrimidinyle) et ester méthylique de N-(2,6-diméthylphényl)-N-(méthoxyacétyl)alanine, à un milieu aqueux, un surfactant choisi dans le groupe consistant en laurylsulfate d'ammonium et un alkylarylsulfonate de métal alcalin, et un polysaccharide ou un polymère synthétique qui est soluble dans un milieu aqueux et qui est choisi dans le groupe consistant en un xanthane, un succinoglycane, un galactomannane et un polymère d'alcool vinylique.

7. Procédé de préparation d'une composition de mousse à usage agricole, comprenant l'étape consistant à soumettre une composition à usage agricole répondant à la définition suivant la revendication 6 à des conditions convenables pour engendrer une mousse aqueuse à partir de celle-ci.

8. Procédé suivant la revendication 6 ou 7, dans lequel l'alkylarylsulfonate de métal alcalin consiste en un alkylarylsulfonate de sodium.

9. Procédé suivant la revendication 6, 7 ou 8, dans lequel le galactomannane consiste en gomme guar.
